# EUROPÄISCHE PATENTSCHRIFT

(11) **EP 1 247 692 B1**
(45) Veröffentlichungstag und Bekanntmachung des Hinweises auf die Patenterteilung: **30.11.2005**
(21) Anmeldenummer: 02007585.9
(22) Anmeldetag: 03.04.2002
(51) Int. Cl.: B60R 1/06, B60R 1/07, B60R 1/12

(54) **Spiegelanordnung für Kraftfahrzeuge**
Mirror arrangement for motor vehicles
Agencement de rétroviseur pour des véhicules automobiles

(30) Priorität: 03.04.2001 DE 20105791 U
(43) Veröffentlichungstag der Anmeldung: 09.10.2002
(73) Patentinhaber: MEKRA Lang GmbH & Co. KG, 90765 Fürth (DE)
(72) Erfinder: Lang, Heinrich, 91465 Ergersheim (DE); Witzke, Michael, 91522 Ansbach (DE)
(74) Vertreter: Winter, Brandl, Fürniss, Hübner Röss, Kaiser, Polte Partnerschaft Patent- und Rechtsanwaltskanzlei

(56) Entgegenhaltungen:
- US-A- 4 837 552
- US-A- 5 194 789

## Beschreibung

Die Erfindung betrifft eine Spiegelanordnung für Kraftfahrzeuge gemäß dem Oberbegriff des Anspruchs 1.

Spiegel für Kraftfahrzeuge, insbesondere Außenspiegel weisen immer mehr Elektronikbauteile auf, z.B. zur Steuerung von Verstellmotoren, zur Steuerung von Anzeigeeinrichtungen, Sensoren und dergleichen. Aus der DE 19904778 A1 ist beispielsweise ein Außenspiegel für Nutzfahrzeuge bekannt, der bei Kurvenfahrten automatisch nachgeführt wird, so daß der tote Winkel bei Kurvenfahrten vermieden wird. Die zugehörigen Elektronikbauteile sind in dem Spiegelgehäuse angeordnet. Da der Außenspiegel Wind und Wetter ausgesetzt ist, müssen diese Elektronikbauteile insbeosndere vor Feuchte geschützt in dem Spiegelgehäuse angeordnet sein. Zu diesem Zweck werden die fraglichen Elektronikbauteile und Schalter vorzugsweise in eine wasserdichte Masse eingegossen bzw. sie befinden sich in einer hermetisch abgedichteten Umhüllung. Wenn bei Wartungsarbeiten die Funktion der einzelnen Komponenten des Spiegels überprüft werden soll, ist es notwendig, die Elektronikbauteile oder Elektronikschalter in bestimmte Betriebszustände oder Schaltzustände zu versetzen. Hierzu ist es notwendig, daß die Elektronikbauteile zugänglich gemacht werden, was mit erheblichen Demontagearbeiten verbunden ist.

Für für Antiblockiersystemen werden elektronische Steuervorrichtungen angeboten, die im Motorraum angeordnet sind und die ein Diagnosefenster mit einem magnetempfindlichen Schalter aufweisen. Wird eine Magnet auf diesen Bereich gehalten wird ein Reset druchgeführt. Der Bereich des Diagnosefensters in dem sich der magnetempfindliche Schalter befindet ist mit der Aufschrift "RESET" gekennzeichnet.

Ausgehend von der DE 19904778 A1 ist es Aufgabe der vorliegenden Erfindung eine Spiegelanordnung für Kraftfahrzeuge so auszugestalten, daß sich bestimmte Schaltzustände und Betriebsmodi leichter aktivieren lassen. Weiter ist es Aufgabe der vorliegenden Erfindung ein System und ein Verfahren zum Aktivieren eines bestimmten Schaltzustandes oder eines Betriebsmodus in einer Schalt-und/oder Steuervorrichtung einer solchen Spiegelanordnung anzugeben.

Die US 5 194 789 A offenbart eine Spielgelanordnung, die dem Oberbegriff des Anspruchs 1 entspricht.

Die Lösung dieser Aufgaben erfolgt durch die Merkmale des Anspruchs 1 bzw. 10.

Zwar ist es Stand der Technik elektronische Schalt- oder Steuervorrichtungen mittels einem magnetempfindlichen Schalter zurückzusetzen, jedoch lassen sich auf einem Außenspiegel für Fahrzeuge aus Designgründen keine entsprechenden Markierungen vorsehen. Es hat sich jedoch herausgestellt, daß eine solche Markierung nicht unbedingt erforderlich ist, da das Wartungspersonal weiß, an welcher Stelle hinter dem Spiegelgehäuse oder der Spiegelscheibe sich der magnetempfindliche Schalter befindet. Durch das Vorsehen wenigstens eines magnetisch betätigbaren Betriebsmodus-Schalter zum Aktivieren eines bestimmten Schaltzustandes oder Betriebsmodus in der elektronischen Schalt- und/oder Steuereinrichtung in dem Spiegelgeäuse kann der gewünschte Betriebsmodus oder Schaltzustand durch einen entsprechend starken Magneten von außerhalb des Spiegels ohne Demontage des Spiegels herbeigeführt werden. Dies vereinfacht Wartungsarbeiten erheblich, da keinerlei Demontage für die Überprüfung notwendig ist.

Gemäß einer vorteilhaften Ausgestaltung der Erfindung nach Anspruch 2 erfolgt diese Aktivierung mittels eines Dauermagneten. Diese Dauermagneten lassen sich einfach und kostengünstig mit einer bestimmten Stärke herstellen.

Gemäß einer bevorzugten Ausführungsform der Erfindung nach Anspruch 3 ist der Betriebsmodusschalter unmittelbar hinter der Spiegelscheibe oder unmittelbar auf der Innenseite des Gehäuses angeordnet. Durch diese Anordnung kann der Betriebsmodus-Schalter gezielt aktiviert werden, in dem der aktivierende Magnet an die betreffende Stelle auf der Außenseite des Gehäuses oder an die betreffende Stelle auf der Außenseite der Spiegelscheibe gehalten wird.

Gemäß einer weiteren vorteilhaften Ausführungsgestaltung der Erfindung nach Anspruch 4 kann der wenigstens eine Betriebsmodus-Schalter auch durch eine Mehrzahl von magnetischen Impulsen aktiviert werden, die durch entsprechende Ansteuerung eines Elektromagneten erzeugt werden. Hierdurch wird eine zufällige Aktivierung des Betriebsmodusschalters ausgeschlossen.

Gemäß der vorteilhaften Ausgestaltung nach Anspruch 5 lassen sich mit unterschiedlichen Kodierungen unterschiedliche Betriebsmodi bzw. Schaltzustände in dem wenigstens einen Betriebsmodus-Schalter aktivieren. Damit können z.B. unterschiedliche Testprogramme aktiviert werden.

Gemäß einer weiteren vorteilhaften Ausgestaltung der Erfindung nach Anspruch 6 umfaßt die Spiegelanordnung eine Anzeigevorrichtung die optisch, akustisch oder in sonstiger Weise anzeigt, wenn durch einen Magneten der jeweilige Betriebsmodus-Schalter aktiviert wird.

Gemäß einer weiteren vorteilhaften Ausgestaltung der Erfindung nach Anspruch 7 ist die Anzeigeeinrichtung eine optische Anzeigeeinrichtung, die insbesondere in die Spiegelscheibe integriert ist. Eine geeignete Anzeige ist beispielsweise aus der DE 19902487 A1 bekannt. Diese optische Anzeige ist hinter der Spiegelscheibe angeordnet und nur sichtbar, wenn sie aktiviert ist. Die optische Anzeigeeinrichtung kann zusätzlich noch für andere Aufgaben vorgesehen sein, wie sie beispielsweise in der DE 19902487 A1 genannt sind. Bezüglich der Details dieser Anzeige wird vollinhaltlich auf die DE 19902487 A1 bezug genommen.

Gemäß einer weiteren vorteilhaften Ausgestaltung der Erfindung nach Anspruch 8 umfaßt die elektronische Steuervorrichtung eine Rechnereinrichtung und eine Speichereinrichtung mit darin gespeicherter Software. Durch den magnetempfindlichen Betriebsmodus-Schalter lassen sich bestimmte Betriebsmodi oder Testprogramme aktivieren. Auf diese Weise kann beispielsweise die Helligkeit einer optischen Anzeige in der Spiegelscheibe in eingebautem Zustand angepaßt werden.

Gemäß einer vorteilhaften Ausgestaltung der Erfindung nach Anspruch 9 ist eine Mehrzahl von Betriebsmodi-Schaltern vorgesehen, die an unterschiedlichen Stellen auf der Innenseite des Spiegelgehäuses oder auf der Innenseite der Spiegelscheibe angeordnet sind. Auf diese Weise lassen sich durch Aktivierung der unterschiedlichen Betriebsmodi-Schalter unterschiedliche Funktionen der elektronischen Steuervorrichtung aktivieren oder unterschiedliche Testprogramme etc. aktivieren.

Durch das System und das Verfahren nach Anspruch 10 wird auf einfache Art und Weise gewährleistet, daß der Magnet exakt auf der richtigen Stelle plaziert wird. Durch die Schablone mit den Lagemarkierungen für die Betriebsmodi-Schalter werden bei einer Mehrzahl von Betriebsmodi-Schaltern Verwechslungen und Fehlbedienungen vermieden.

Durch die vorteilhafte Ausgestaltung der Erfindung nach Anspruch 11 wird gewährleistet, daß die Schablone in definierter Weise auf der Spiegelanordnung plaziert wird ohne daß zusätzliche Markierungen auf der Oberfläche der Spiegelanordnung nötig wären. Die Form der Spiegelscheib zusätzlich mit der Angabe "oben" und/oder "unten" auf der Schablone ergibt eine eindeutige Anordnung der Schablone auf der Spiegelanordnung.

Gemäß einer vorteilhaften Ausgestaltung der Erfindung nach Anspruch 12 sind die Markierungen auf der Markierungsschablone beschriftet, so daß sofort ersichtlich ist, welche Funktion der durch die jeweilige Markierung angegeben Betriebsmodus-Schalter hat. Hierdurch werden Fehlbedienungen vermieden.

Weitere Einzelheiten, Merkmale und Vorteile der Erfindung ergeben sich aus der nachfolgenden Beschreibung einer bevorzugten Ausführungsform anhand der Zeichnung.

Es zeigt:
Fig. 1 eine schematische Darstellung einer ersten Ausführungsform,
Fig. 2 eine schematische Darstellung einer zweiten Ausführungsform,
Fig. 3 eine schematische Darstellung einer dritten Ausführungsform,
Fig. 4 eine schematische Darstellung einer Markierungsschablone für die Ausführungsform nach Fig. 3, und
Fig. 5 eine schematische Darstellung einer Markierungsschablone für eine Ausführungsform bei der die Betriebsmodi-Schalter auf der Innenseite des Spiegelgehäuses angeordnet sind.

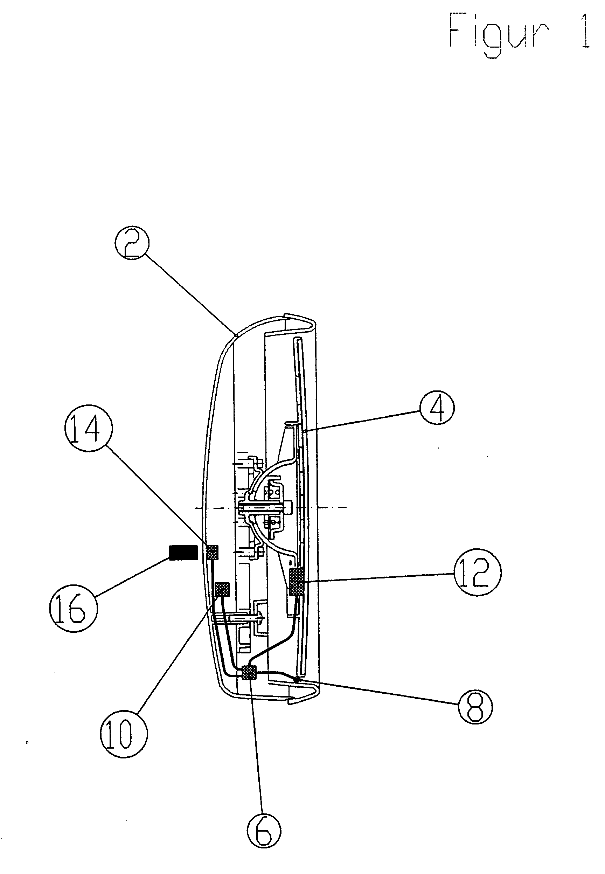

Fig. 1 zeigt schematisch eine erste Ausführungsform der erfindungsgemäßen Spiegelanordnung mit einem Spiegelgehäuse 2, einer in dem Spiegelgehäuse 2 angeordneten Spiegelscheibe 4 und einer elektronischen Steuervorrichtung 6, die ebenfalls im Inneren des Spiegelgehäuses 2 angeordnet ist. Die elektronische Steuervorrichtung 6 dient zum Ansteuern einer optischen Anzeigeeinrichtung 8, zum Ansteuern einer Gyrovorrichtung 10 zum automatischen Nachführen der Spiegelscheibe 4 bei Kurvenfahrten und zur Steuerung einer Spiegelverstellvorrichtung 12 zum Verstellen der Spiegelscheibe 4 entsprechend von über Schaltern erzeugten Verstellsignalen oder entsprechend von Verstellsignalen aus der Gyrovorrichtung 10.

An einer bestimmten Stelle an der Innenseite des Spiegelgehäuseses 2 auf der von der Spiegelscheibe 4 abgewandten Seite des Spiegelgehäuses 2 ist ein magnetisch betätigbarer Betriebsmodus-Schalter 14 angeordnet. Der Betriebsmodus-Schalter 14 kann mittels eines Akrivierungsmagneten in Form eines Dauermagneten 16 aktiviert werden, der auf dem Bereich auf der Außenseite des Spiegelgehäuses 2 über dem Betriebsmodus-Schalter 14 auf der Innenseite des Spiegelgehäuses 2 positioniert wird. Durch den magnetisch aktivierbaren Betriebsmodus-Schalter 14 lassen sich bestimmte Schaltzustände oder Betriebsmodi in der Steuervorrichtung 6 aktivieren. Beispielsweise kann durch Betätigung des Betriebsmodus-Schalters 14 erreicht werden, daß die elektronische Steuervorrichtung 6 die optische Anzeige 8 aufleuchten läßt oder der gesamte Verstellbereich der Spiegelscheibe 4 durch die Spiegelverstellvorrichtung 12 abgefahren wird. Auf diese Weise läßt sich ohne Demontage eines einzigen Bauteils die Funktionsweise der in dem Spiegelgehäuse angeordneten Funktionseinheiten, d. h. der optischen Anzeige 8, der Gyrovorrichtung 10, der Spiegelverstellvorrichtung 12 und auch der Steuervorrichtung 6 überprüfen.

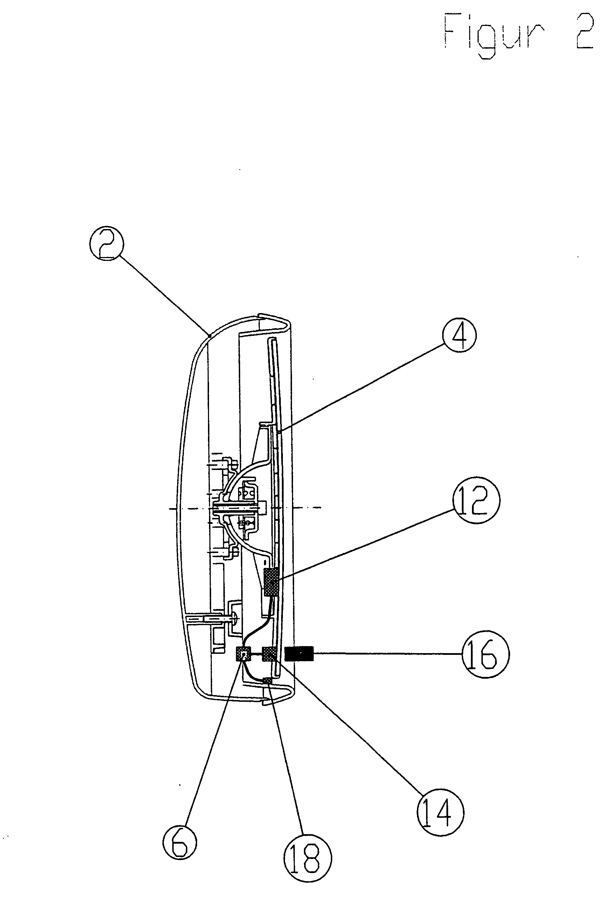

Fig. 2 zeigt eine zweite beispielhafte Ausführungsform der Erfindung bei der die elektronische Steuervorrichtung neben der Spiegelverstelleinrichtung 10 noch einen Temperatursensor 18 ansteuert. Der Betriebsmodus-Schalter 14 ist hierbei auf der Rückseite der Spiegelscheibe 4 angeordnet und kann durch Positionieren des Aktivierungsmagneten 16 auf der Vorderseite der Spiegelscheibe 4 aktiviert werden.

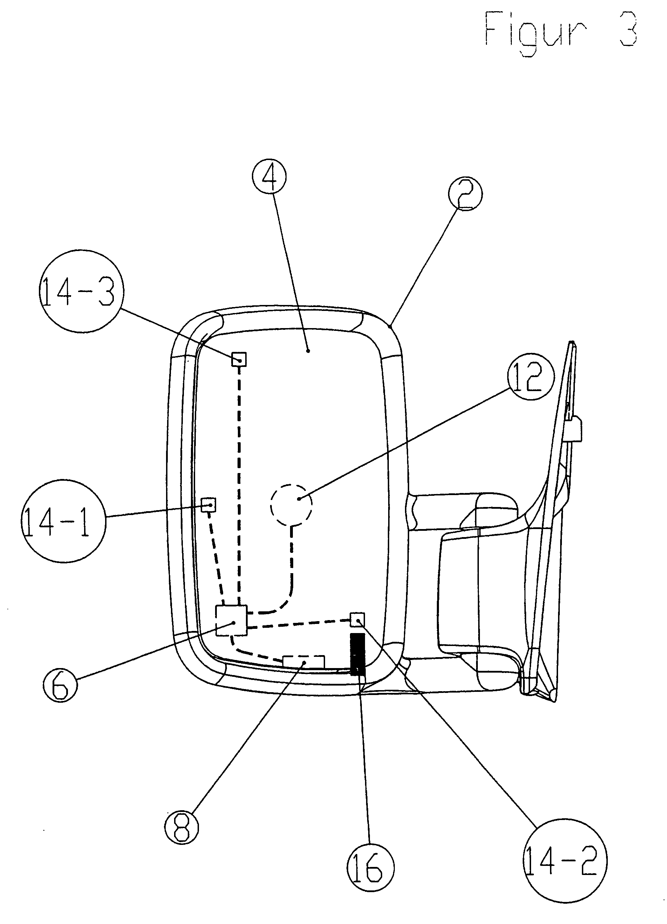

Fig. 3 zeigt eine dritte Ausführungsform der Erfindung bei der eine Mehrzahl von Betriebsmodi-Schaltern 14-1, 14-2 und 14-3 auf der Rückseite der Spiegelscheibe 4 angeordnet sind. Durch Aktivierung der unterschiedlichen Betriebsmodi-Schalter 14-i lassen sich unterschiedliche Schaltzustände oder Betriebsmodi einstellen. Damit ist es z.B. möglich, daß mit dem Betriebsmodus-Schalter 14-1 ein Testprogramm für die Spiegelverstellvorrichtung 12 aktiviert wird, während mit dem Betriebsmodus-Schalter 14-2 ein Testprogramm für die optische Anzeigeeinrichtung 8 aktiviert wird. Mit dem Betriebsmodus-Schalter 14-3 läßt sich die Schalt- und/oder Steuervorrichtung 6 zurücksetzen.

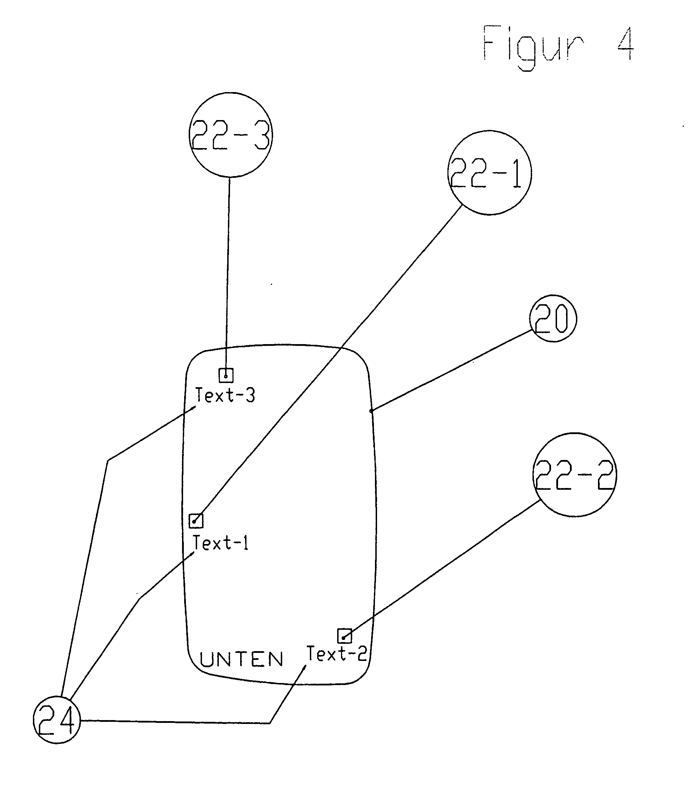

Um eine sichtbare Markierung der Lage der Betriebsmodi-Schalter 14-i hinter der Spiegelscheibe 4 auf der Vorderseite der Spiegelscheibe 4 zu vermeiden, wird eine Markierungsschablone 20 bereitgestellt, die in Fig. 4 dargestellt ist. Die Markierungsschablone 20 besitzt die äußere Form der Spiegelscheibe 4 und sie weist Markierungen 22-i auf, die die Position der einzelnen Betriebsmodi-Schalter 14-i hinter der Spiegelscheibe 4 angeben. Zusätzlich ist auf dieser Schablone 20 noch eine Beschriftung 24 angeben, die erläutert, welcher Schaltzustand oder welcher Betriebsmodus sich mit dem jeweiligen Betriebsmodi-Schalter 14-i an der jeweiligen Position aktivieren läßt. Durch die Angabe "UNTEN" wird sichergestellt, daß die Markierungsschablone 20 in der richtigen Orientierung auf die Spiegelscheibe 4 aufgelegt wird. Die Markierungsschablone 20 wird bei Wartungsarbeiten von dem Wartungspersonal verwendet und sie stellt sicher, daß der Aktivierungsmagnet 16 an der richtigen Stelle positioniert wird.

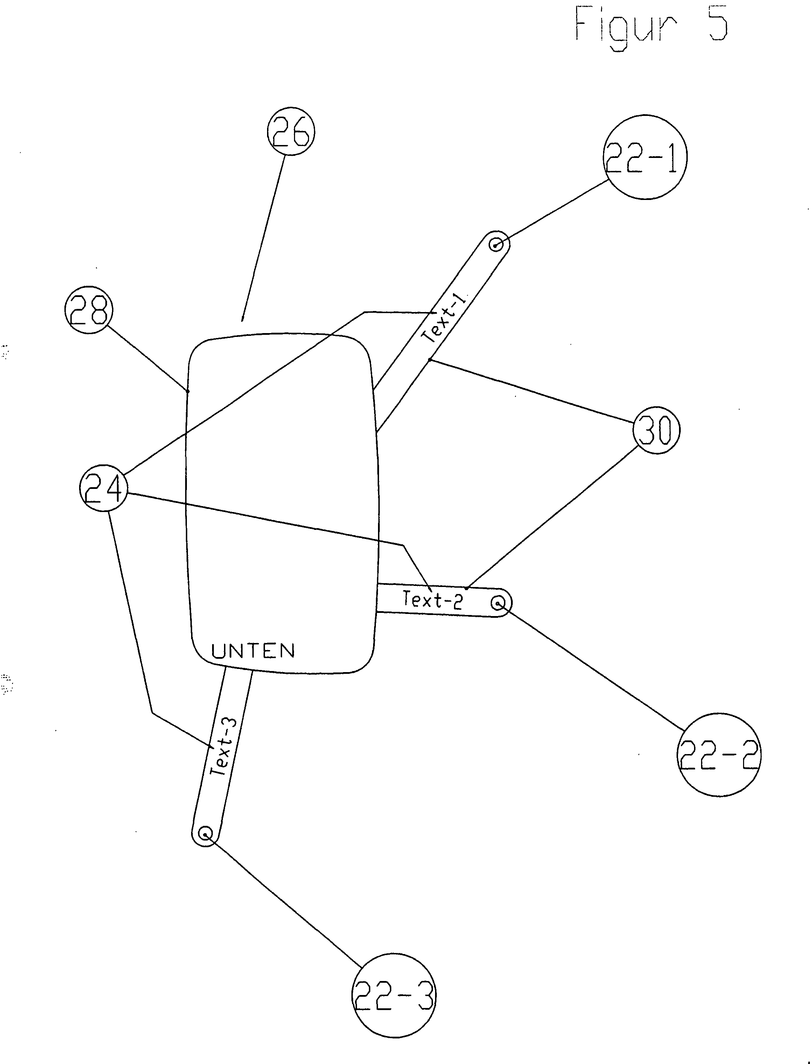

Fig. 5 zeigt eine Variante einer Markierungsschablone 26, die für eine Ausführungsform geeignet ist, bei der die Betriebsmodi-schalter 14-i auf der Innenseite des Spiegelgehäuses 2 angeordnet sind, wie dies bei der Ausführungsform nach Fig. 1 der Fall ist. Die Markierungsschablone 26 umfaßt einen Hauptteil 28 mit sich davon wegerstreckenden Streifen 30. Der Hauptteil 28 ist ebenfalls der Form der Spiegelscheibe 4 angepaßt und auf den sich von dem Hauptteil 28 wegerstreckenden Streifen 30 sind die Markierungen 22-i für die Betriebsmodi-Schalter 14-i aufgezeichnet. Ebenfalls auf den Streifen 30 sind die Beschriftungen 24 aufgedruckt, die angeben, welche Funktion der jeweilige Betriebsmodi-Schalter 14-i hat. Der Hauptteil 28 ist vorzugsweise starr und z. B. aus Karton. Die Streifen 30 sind flexibel und lassen sich damit umfalten. Durch Anlegen des Hauptteils 28 in der richtigen Orientierung gemäß der Beschriftung "UNTEN" und Umlegen und damit Anlegen der flexiblen Streifen 30 an die Außenseite des Spiegelgehäuses 2 geben die Markierungen 22-i die genaue Lage der Betriebsmodi-Schalter 14-i auf der Innenseite des Spiegelgehäuses an. Damit wird für Wartungspersonal die Lage und die Funktion der einzelnen Betriebsmodi-Schalter 14-i eindeutig eindeutig angegeben.

Es ist auch möglich, daß Betriebsmodi-Schalter 14-i sowohl auf der Rückseite der Spiegelscheibe 4 als auch auf der Innenseite des Spiegelgehäuses 2 angeordnet sind. In diesem Fall wären bei der Markierungsschablone 26 auf auf dem Hauptteil 28 Beschriftungen 24 und Markierungen 22-i angeordnet.

### Bezugszeichenliste

- 2: Spiegelgehäuse
- 4: Spiegelscheibe
- 6: Schalt- und/oder Steuervorrichtung
- 8: optische Anzeigeinrichtung
- 10: Gyrovorrichtung
- 12: Spiegelverstellvorrichtung
- 14-i: Betriebsmodus-Schalter
- 16: Aktivierungsmagnet
- 18: Temperatursensor
- 20: Markierungsschablone
- 22-i: Markierung
- 24: Beschriftung
- 26: Markierungsschablone
- 28: Hauptteil von 22
- 30: Streifen von 22

## Patentansprüche

1. Spiegelanordnung für Kraftfahrzeuge, insbesondere Außenspiegel für Kraftfahrzeuge, mit
einem Spiegelgehäuse (2),
wenigstens einer in dem Spiegelgehäuse (2) angeordneten Spiegelscheibe (4), und
einer in dem Spiegelgehäuse (2) angeordneten elektronischen Schalt- und/oder Steuervorrichtung (6) zum Schalten oder Steuern von mindestens einer Funktionseinheit (8, 10, 12, 18) des Kraftfahrzugs,
wobei
die elektronische Schalt- und/oder Steuervorrichtung (6) wenigstens einen betätigbaren Betriebsmodus-Schalter (14-i) zum Aktivieren eines bestimmten Schaltzustandes oder eines Betriebsmodus umfaßt, **dadurch gekennzeichnet, daß** der Betriebsmodus-Schalter (14-i) magnetisch betätigbar ist, und
daß der wenigstens eine Betriebsmodi-Schalter (14-i) durch Positionierung eines Dauermagneten (16) mit einer bestimmten Stärke in seiner unmittelbaren Nähe betätigbar ist.

2. Spiegelanordnung nach Anspruch 1, **dadurch gekennzeichnet, daß** der wenigstens eine Betriebsmodus-Schalter (14-i) an einer bestimmten Stelle unmittelbar hinter der Spiegelscheibe (4) oder unmittelbar auf der Innenseite des Spiegelgehäuses (2) angeordnet ist.

3. Spiegelanordnung nach einem der vorhergehenden Ansprüche, **dadurch gekennzeichnet, daß** der wenigstens eine Betriebsmodus-Schalter (14-i) mittels kodierter magnetischer Impulse betätigbar ist.

4. Spiegelanordnung nach Anspruch 3, **dadurch gekennzeichnet, daß** unterschiedliche Betriebsmodi mittels unterschiedlich kodierten magnetischen Impulsen aktivierbar sind.

5. Spiegelanordnung nach einem der vorhergehenden Ansprüche, **gekennzeichnet durch** eine Anzeigeeinrichtung (8)

6. Spiegelanordnung nach Anspruch 5, **dadurch gekennzeichnet, daß** die Anzeigeeinrichtung eine optische Anzeigeeinrichtung (8) ist und daß die optische Anzeigeeinrichtung (8) in die Spiegelscheibe (4) integriert ist.

7. Spiegelanordnung nach einem der vorhergehenden Ansprüche, **dadurch gekennzeichnet, daß** die elektronische Steuervorrichtung (6) eine Rechnereinrichtung, eine Speichereinrichtung mit darin gespeicherter Software und eine Schnittstelleneinrichtung zur Verbindung der Steuervorrichtung (6) mit der wenigstens einen Funktionseinheit (8, 10, 12, 18) aufweist, und daß durch den wenigstens einen Betriebsmodus-Schalter (14-i) wenigstens ein Betriebsmodus der Rechnereinrichtung aktivierbar ist.

8. Spiegelanordnung nach einem der vorhergehenden Ansprüche, **dadurch gekennzeichnet, daß** eine Mehrzahl von magnetisch betätigbaren Betriebsmodi-Schaltern (14-i) zum Aktivieren unterschiedlicher Betriebsmodi der Rechnereinrichtung vorgesehen sind und daß die Betriebsmodi-Schalter (14-i) räumlich getrennt und magnetisch voneinander entkoppelt angeordnet sind.

9. Markierungsschablone (20;22) zum Aktivieren eines bestimmten Schaltzustandes oder eines Betriebsmodus in einer Schalt-und/oder Steuervorrichtung (6) einer Spiegelanordnung nach einem der vorhergehenden Ansprüche die außen an die Spiegelanordnung anlegbar ist und Markierungen (22-i) für die Lage des wenigstens einen magnetisch aktivierbaren Betriebsmodus-Schalter (14-i) aufweist.

10. Markierungsschlablone (20;22) nach Anspruch 9 **dadurch gekennzeichnet, daß** die Markierungsschablone (20; 22) wenigstens wenigstens einen Teilbereich (20; 24) aufweist, der die Form der Spiegelscheibe (4) der Spiegelanordnung besitzt.

11. Markierungsschaltone (20,22) nach Anspruch 9 oder 10, **dadurch gekennzeichnet, daß** die Markierungen (22-i) beschriftet sind.

## Claims

1. A mirror arrangement for automotive vehicles, in particular an external mirror for automotive vehicles, comprising
a mirror housing (2),
at least one mirror pane (4) arranged in the mirror housing (2), and
an electronic switching and/or control device (6) for switching or controlling at least one functional unit (8, 10, 12, 18) of the automotive vehicle,
wherein the an electronic switching and/or control device (6) includes at least one operation mode switch (14-i) adapted to be operated for activating a particular switching condition or an operation mode,
**characterized in that**
the operation mode switch (14-i) is adapted to be operated magnetically, and **in that** the at least one operation mode switch (14-i) is adapted to be operated by positioning a permanent magnet (16) of a specified strength in its immediate proximity.

2. The mirror arrangement in accordance with claim 1, **characterized in that** the at least one operation mode switch (14-i) is arranged in a specific position immediately behind the mirror pane (4) or immediately on the inside of the mirror housing ((2).

3. The mirror arrangement in accordance with one of the preceding claims, **characterized in that** the at least one operation mode switch (14-i) is adapted to be operated by means of coded magnetic pulses.

4. The mirror arrangement in accordance with claim 3, **characterized in that** different operation modes can be activated by means of differently coded magnetic pulses.

5. The mirror arrangement in accordance with one of the preceding claims, **characterized by** display means (8).

6. The mirror arrangement in accordance with claim 5, **characterized in that** the display means are an optical display means (8), and **in that** the optical display means (8) is integrated into the mirror pane (4).

7. The mirror arrangement in accordance with one of the preceding claims, **characterized in that** the electronic control device (6) is a calculator means, a memory means with software stored therein, and an interface means for connection of the control device (6) with the at least one functional unit (8, 10, 12, 18), and **in that** at least one operation mode of the calculator means can be activated through the intermediary of the at least one operation mode switch (14-i).

8. The mirror arrangement in accordance with one of the preceding claims, **characterized in that** a plurality of magnetically operable operation mode switches (14-i) for the activation of different operation modes of the calculator means are provided, and **in that** the operation mode switches (14-i) are arranged spatially separately and magnetically uncoupled from each other.

9. A marking template (20; 22) for activating a particular switching condition or an operation mode in a switching and/or control device (6) of a mirror arrangement in accordance with one of the preceding claims, which is capable of being applied externally to the mirror arrangement and includes markings (22-i) for the position of the at least one magnetically operable operation mode switch (14-i).

10. The marking template (20; 22) in accordance with claim 9, **characterized in that** the marking template (20; 22) includes at least one partial area (20; 24) having the shape of the mirror pane (4) of the mirror arrangement.

11. The marking template (20; 22) in accordance with claim 9 or 10, **characterized in that** the markings (22-i) are provided with inscriptions.

## Revendications

1. Agencement de rétroviseur pour véhicules automobiles, en particulier rétroviseur extérieur pour véhicules automobiles, comportant
un boîtier de rétroviseur (2),
au moins une glace de rétroviseur (4) agencée dans le boîtier de rétroviseur (2), et
un dispositif de commutation et/ou de commande électronique (6) agencé dans le boîtier de rétroviseur (2) pour commuter ou commander au moins une unité fonctionnelle (8, 10, 12, 18) du véhicule automobile, dans lequel
le dispositif de commutation et/ou de commande électronique (6) comprend au moins un commutateur de mode de service actionnable (14-i) pour activer un état de commutation déterminé ou un mode de service, **caractérisé en ce que** le commutateur de mode de service (14-i) est actionnable magnétiquement, et
**en ce que** le au moins un commutateur de mode de service (14-i) est actionnable par positionnement d'un aimant permanent (16) avec une force déterminée dans sa proximité immédiate.

2. Agencement de rétroviseur selon la revendication 1, **caractérisé en ce que** le au moins un commutateur de mode de service (14-i) est disposé en un endroit déterminé directement derrière la glace de rétroviseur (4) ou directement sur le côté intérieur du boîtier de rétroviseur (2).

3. Agencement de rétroviseur selon l'une des revendications précédentes, **caractérisé en ce que** le au moins un commutateur de mode de service (14-i) est actionnable au moyen d'impulsions magnétiques codées.

4. Agencement de rétroviseur selon la revendication 3, **caractérisé en ce que** divers modes de service sont activables au moyen d'impulsions magnétiques codées de façon distincte.

5. Agencement selon l'une des revendications précédentes, **caractérisé par** un dispositif d'affichage (8).

6. Agencement de rétroviseur selon la revendication 5, **caractérisé en ce que** le dispositif d'affichage est un dispositif d'affichage optique (8) et **en ce que** le dispositif d'affichage optique (8) est intégré dans la glace de rétroviseur (4).

7. Agencement de rétroviseur selon l'une des revendications précédentes, **caractérisé en ce que** le dispositif de commande électronique (6) présente un système de calcul, un système de mémoire avec un logiciel stocké dans celle-ci et un dispositif d'interface pour la liaison.du dispositif de commande (6) avec la au moins une unité fonctionnelle (8, 10, 12, 18), et **en ce que** au moins un mode de service du système de calcul est activable par le au moins un commutateur de mode de service (14-i).

8. Agencement de rétroviseur selon l'une des revendications précédentes, **caractérisé en ce qu'**il est prévu une pluralité de commutateurs de modes de service actionnables magnétiquement (14-i) pour activer différents modes de service du système de calcul et **en ce que** les commutateurs de modes de service sont disposés de façon spatialement séparés et magnétiquement découplés entre eux.

9. Gabarit de marquage (20 ; 22) pour activer un état de commutation déterminé ou un mode de service dans un dispositif de commutation et/ou de commande (6) d'un agencement de rétroviseur selon l'une des revendications précédentes qui peut être monté à l'extérieur sur le boîtier de rétroviseur et présente des marquages (22-i) pour la position du au moins un commutateur de mode de service activable magnétiquement (14-i).

10. Gabarit de marquage (20; 22) selon la revendication 9, **caractérise en ce que** le gabarit de marquage (20 ; 22) présente au moins une zone partielle (20 ;24) qui possède la forme de la glace de rétroviseur (4) de l'agencement de rétroviseur.

11. Gabarit de marquage (20; 22)'selon la revendication 9 ou 10, **caractérisé en ce que** les marquages (22-i) sont des inscriptions.
